# EUROPÄISCHE PATENTSCHRIFT

(11) **EP 3 289 941 B1**
(45) Veröffentlichungstag und Bekanntmachung des Hinweises auf die Patenterteilung: **02.03.2022**
(21) Anmeldenummer: 17185868.1
(22) Anmeldetag: 11.08.2017
(51) Int. Cl.: A47J 43/07

(54) **KÜCHENGERÄT, BEARBEITUNGSGEFÄSS UND SYSTEM AUS EINEM KÜCHENGERÄT UND EINEM BEARBEITUNGSGEFÄSS**
KITCHEN APPLIANCE, PROCESSING CONTAINER AND SYSTEM THAT CONSISTS OF A KITCHEN APPLIANCE AND A PROCESSING CONTAINER
MATÉRIEL DE CUISINE, RÉCIPIENT DE TRAITEMENT ET SYSTÈME CONSTITUÉ D'UN MATÉRIEL DE CUISINE ET D'UN RÉCIPIENT DE TRAITEMENT

(30) Priorität: 26.08.2016 DE 102016216098
(43) Veröffentlichungstag der Anmeldung: 07.03.2018
(73) Patentinhaber: BSH Hausgeräte GmbH, 81739 München (DE)
(72) Erfinder: Brecko, Ales, 3000 Celje (SI); Strojansek, Aleksander, 3331 Nazarje (SI); Svara, Matej, 6221 Dutovlje (SI)

(56) Entgegenhaltungen:
- US-A- 2 498 570
- US-A1- 2006 102 018
- US-B1- 6 776 086

## Beschreibung

### Hintergrund der Erfindung

Die vorliegende Erfindung betrifft ein Küchengerät mit einer Kupplung für ein Bearbeitungsgefäß und mit einer Sicherungseinrichtung zur Überwachung der korrekten Kupplung des Bearbeitungsgefäßes gemäß dem Oberbegriff des Anspruchs 1. Weiterhin betrifft die Erfindung auch ein Bearbeitungsgefäß und ein System, umfassend das Gerät und das Gefäß.

### Stand der Technik

Beispielsweise aus der deutschen Patentanmeldung DE 10 2010 039718 A1 ist ein derartiges Küchengerät bekannt. Solche Küchengeräte nutzen den Schwenkarm zur lösbaren Befestigung und Anordnung von Werkzeugen innerhalb einer Rührschüssel. Zum Wechsel von Werkzeugen muss der Schwenkarm in der Regel nach hinten geklappt werden. Aus dem Stand der Technik sind Küchenmaschinen bekannt, wie z. B. die Maschinen der Reihe MUM der Bosch und Siemens Hausgeräte GmbH, die einen Sockel mit einem Kupplungsteller aufweisen, an den eine Rührschüssel angekuppelt werden kann. Weiter weisen diese Maschinen einen elektrischen Motor auf, der ein Werkzeug, z. B. ein Knetwerkzeug oder einen Rührbesen, rotierend antreibt, der bei angekuppeltem Bearbeitungsgefäß in dieses Gefäß hineinragt, um in dem Gefäß vorgehaltene Speisen zu bearbeiten.

Die bekannten Küchenmaschinen weisen außerdem eine Sicherungseinrichtung, gewöhnlich einen mit einer Nase an der Rührschüssel zusammenwirkenden Schalter auf, um zu prüfen, ob die Rührschüssel korrekt an dem Kupplungsteller angekuppelt ist. Die Zuverlässigkeit einer derartigen Sicherungseinrichtung kann jedoch durch Formabweichungen der Rührschüssel, z. B. aufgrund von Fertigungstoleranzen oder einer hohen Belastung der Rührschüssel, beeinträchtigt werden.

Weitere Küchengeräte mit Sicherheitseinrichtungen zur Überprüfung eines sicheren Betriebs sind in der US 2 498 570 A und US 2006/102018 A1 offenbart.

### Der Erfindung zu Grunde liegende Aufgabe

Der Erfindung liegt die Aufgabe zugrunde, ein Küchengerät zu schaffen, das eine Kupplung für ein Bearbeitungsgefäß und eine Sicherungseinrichtung, um zu prüfen, ob das Bearbeitungsgefäß in der vorgesehenen Weise an die Kupplung angekoppelt ist, aufweist, und das gegenüber dem Stand der Technik verbessert ist. Insbesondere soll ermöglicht werden, dass die Sicherungseinrichtung auch dann zuverlässig arbeitet, wenn das Bearbeitungsgefäß, z. B. durch Fertigungstoleranzen oder durch Belastung, von einer idealen Form abweicht. Die Sicherungseinrichtung soll möglichst preiswert und einfach herzustellen sein, ohne dass dafür wesentliche Änderungen an der Gestaltung des Sockelteils vorgenommen werden müssen.

### Erfindungsgemäße Lösung

Zur Lösung der Aufgabe lehrt die Erfindung ein Küchengerät mit den Merkmalen des Patentanspruchs 1. Durch die bewegbare Lagerung der Halterung ist vorteilhafterweise erreichbar, dass die Sicherungseinrichtung auch dann, wenn die Form des Bearbeitungsgefäßes von einer idealen Form abweicht, in eine Position gebracht werden kann, in der sie prüfen kann, ob das Bearbeitungsgefäß in der vorgesehenen Weise an die Kupplung angekoppelt ist. Vorzugsweise ist die Halterung in Richtung der vorgesehenen Position des Bearbeitungsgefäßes bewegbar. Vorzugsweise ist die Halterung in Richtung der Kupplung für das Bearbeitungsgefäß bewegbar. Im Sinne der vorliegenden Erfindung bedeutet "in der vorgesehenen Weise an die Kupplung angekoppelt", dass die Schüssel in einer Weise angekoppelt ist, die den sicheren und ordnungsgemäßen Betrieb des Küchengeräts unter Verwendung des Bearbeitungsgefäßes erlaubt. Bewegbar im Sinne der Erfindung heißt, dass die Halterung eine Translation oder eine Rotation ausführen kann. Eine Rotation der Halterung ist aufgrund des begrenzten Bauraums bevorzugt.

Ein Küchengerät im Sinne der Erfindung ist vorzugsweise ein elektrisch oder mechanisch antreibbares Standküchengerät, besonders vorzugsweise eine Küchenmaschine, z. B. eine Universalküchenmaschine. Das Küchengerät ist zur Bearbeitung von Nahrungsmitteln vorgesehen und kann zu diesem Zweck mit Bearbeitungswerkzeugen zur Bearbeiten von Nahrungsmitteln in dem Bearbeitungsgefäß, beispielsweise durch Mixen, Kneten, Häckseln, Schneiden, Pürieren oder Entsaften, bestückt werden. Das bevorzugte Küchengerät umfasst mindestens eine Kupplung zur Aufnahme eines oder mehrerer solcher Bearbeitungswerkzeuge. Das bevorzugte Bearbeitungsgefäß ist eine Rührschüssel.

Das Sockelteil im Sinne dieser Erfindung ist das Element des Küchengeräts, das im Betriebszustand des Küchengeräts auf einer Unterlage, wie beispielsweise einer Küchenarbeitsplatte, abgestellt ist, also mit ihr über Standfüße, beispielsweise an einer Bodenwand, oder auch direkt über eine Bodenwand in Kontakt steht.

Durch die Erfindung wird ein Küchengerät bereitgestellt, das eine Sicherungseinrichtung für die Überwachung der Kupplung aufweist, die auch in einem weiten Bereich von Abweichungen der Form des Bearbeitungsgefäßes von einer Idealform noch zuverlässig arbeitet. Mithilfe der Erfindung können insbesondere Beeinträchtigungen der Funktion der Sicherungseinrichtung aufgrund der Fertigung des Bearbeitungsgefäßes und Formabweichungen durch die Beladung des Bearbeitungsgefäßes vermieden werden.

Weiterhin kann die Kupplung auch überwacht werden, wenn sich die Rührschüssel während der Bearbeitung von schweren Nahrungsmitteln bewegt. In solchen Fällen können Kräfte bis zu 600 N auftreten, die zu einer Bewegung der Rührschüssel bis zu 0,5 mm führen können.

### Bevorzugte Ausgestaltung der Erfindung

Vorteilhafte Aus- und Weiterbildungen, welche einzeln oder in Kombination miteinander eingesetzt werden können, sind Gegenstand der abhängigen Patentansprüche.

Die Halterung ist vorzugsweise um wenigstens 2 Millimeter (mm), besonders vorzugsweise um mindestens 5 mm in Richtung der vorgesehenen Position des Bearbeitungsgefäßes bewegbar. Die Halterung ist vorzugsweise um wenigstens 2 Millimeter (mm), besonders vorzugsweise um mindestens 5 mm in Richtung der Kupplung für das Bearbeitungsgefäß bewegbar. In einer bevorzugten Ausführung der Erfindung ist die Halterung an dem Küchengerät in um die Schenkachse schwenkbarer Weise bewegbar gelagert.

In einer bevorzugten Ausführung der Erfindung ist die Halterung elastisch vorgespannt. Vorzugsweise ist die Halterung in Richtung der vorgesehenen Position des Bearbeitungsgefäßes vorgespannt. Vorzugsweise ist die Halterung in Richtung der Kupplung für das Bearbeitungsgefäß vorgespannt. Durch diese Vorspannung ist es erreichbar, dass die Sicherungseinrichtung das Bearbeitungsgefäß in dessen in die Kupplung eingesetztem Zustand berühren kann, und zwar selbst dann, wenn das Bearbeitungsgefäß von einer Idealform abweist. Die Vorspannung wird vorzugsweise durch eine Spannfeder bereitgestellt, z. B. in Form einer Schraubenfeder, einer Spiralfeder oder eines einfachen Federbogens.

Erfindungsgemäß ist die Schwenkachse der Halterung parallel zur Kupplungsachse der Kupplung für das Bearbeitungsgefäß ausgerichtet. Die Kupplungsachse im Sinne der vorliegenden Erfindung ist die in Kupplungsrichtung, also der Richtung, aus der das Bearbeitungsgefäß auf die Kupplung aufgesetzt wird, verlaufende Achse der Kupplung. Mit dieser Ausführung der Erfindung kann erreicht werden, dass die Schwenkbewegung der Halterung in der Ebene eines Kupplungstellers der Kupplung verläuft. Dies kann insbesondere dann vorteilhaft sein, wenn vorgesehen ist, dass die Sicherungseinrichtung das ordnungsgemäße Angekoppelt-Sein des Bearbeitungsgefäßes an der Außenseite des Bearbeitungsgefäßes prüft, z. B. durch Berühren der Außenseite des Bearbeitungsgefäßes. In einer bevorzugten Ausführung der Erfindung prüft die Sicherungseinrichtung dies an der Außenseite des Sockels des Bearbeitungsgefäßes, mit dem das Bearbeitungsgefäß auf dem Kupplungsteller aufsitzt. Vorzugsweise berührt die Sicherungseinrichtung das Bearbeitungsgefäß in dessen in die Kupplung eingesetztem Zustand an dessen Sockel.

Die Sicherungseinrichtung einer bevorzugten Ausführungsform der Erfindung umfasst ein relativ zur Halterung der Sicherungseinrichtung bewegbares, vorzugsweise verschiebbares, Kontaktelement, z. B. einen Stift. Vorzugseise ist das Kontaktelement so ausgebildet und angeordnet, dass es das Bearbeitungsgefäß in dessen ordnungsgemäß in die Kupplung eingesetztem Zustand berührt, vorzugsweise an dessen Sockel. Besonders vorzugsweise ist das Kontaktelement so ausgebildet und angeordnet, dass in dem Fall, dass das Bearbeitungsgefäß ordnungsgemäß in die Kupplung eingesetzt ist, ein Element des Bearbeitungsgefäßes, besonders vorzugsweise des Sockels des Bearbeitungsgefäßes, z. B. eines Nase, eine Kraft auf das Kontaktelement ausübt, vorzugsweise eine solche Kraft, die das Kontaktelement relativ zur Halterung der Sicherungseinrichtung bewegt, vorzugsweise verschiebt. Im Falle eines Stifts als Kontaktelement verläuft die bevorzugte Bewegung in Richtung der Längserstreckung des Stifts.

In einer bevorzugten Ausführung der Erfindung weist die Sicherungseinrichtung einen Schalter auf. Vorzugsweise ist der Schalter durch das Kontaktelement auslösbar. Ein bevorzugter Schalter ist ein Tastschalter. Ein bevorzugter Schalter ist ein Mikroschalter. Besonders bevorzugt ist es, dass das Kontaktelement mit einem Gleitelement zum Auslösen des Schalters verbunden ist. Es ist ein erreichbarer Vorteil des Gleitelements, dass es den Schalter präzise und auf technisch einfache Weise betätigen kann. In einer alternativen Ausführung der Erfindung ist ein Teil des Schalters, vorzugsweise ein Tastelement des Schalters, das Kontaktelement.

Das bevorzugte Kontaktelement ist durch ein elastisches Element vorgespannt. Eine bewährte technisch einfache Ausführung des elastischen Elements ist die Verwendung einer Schraubenfeder. Die Vorspannung mithilfe von Federkräften führt zu einer Rückstellung in die Ausgangsposition auf einfache Art und Weise. Das elastische Element ist so gewählt, dass die Vorspannung des Kontaktelements kleiner ist als die Vorspannung der Halterung. So kann vorteilhafterweise sichergestellt werden, dass das Kontaktelement zuverlässig gegen die Vorspannung bewegt werden kann, vorzugsweise zum Auslösen des Schalters, und nicht etwa ein Ausweichen der Halterung gegen deren eigene Vorspannung ein Auslösen des Schalters verhindert. Vorzugsweise ist die Kraft, mit der die Halterung vorgespannt ist, mindestens doppelt, besonders vorzugsweise mindesten viermal so groß wie die Kraft, mit der das Kontaktelement vorgespannt ist.

Die Halterung des erfindungsgemäßen Küchengeräts weist vorzugsweise einen Vorsprung auf, der das Kontaktelement daran hindern kann, bewegt zu werden, wenn die Bearbeitungsgefäß nicht in vorgesehener Weise an die Kupplung angekoppelt ist. Zu diesem Zweck reicht der Vorsprung vorzugsweise weiter in die Richtung, in der das Bearbeitungsgefäß vorgesehen ist, als das Kontaktelement in einem betätigten Zustand in diese Richtung reicht. So kann erreicht werden, dass das Kontaktelement nicht in betätigender Weise bewegt wird, wenn das Haltelement zwar die Außenseite des Bearbeitungsgefäßes berührt, das Bearbeitungsgefäß aber nicht in der vorgesehenen Weise an die Kupplung angekoppelt ist. Um das Kontaktelement auszulösen, ist vorzugsweise ein Zapfen an der Außenseite des Bearbeitungsgefäßes, besonders vorzugsweise an deren Sockel vorgesehen. Dieser kann das Kontaktelement betätigen, wenn das Bearbeitungsgefäß in der vorgesehenen Weise an die Kupplung angekoppelt ist.

Eine präzise Kupplung wird bei einem anderen erfindungsgemäßen Küchengerät dadurch erreicht, dass die Kupplung rotationssymmetrisch um die Kupplungsachse angeordnete Kupplungsstellen aufweist. Gegenstand der Erfindung ist auch ein Bearbeitungsgefäß für ein Küchengerät. Ebenso ist Teil der Erfindung das System aus Gerät und Bearbeitungsgefäß.

Die Kupplung kann am Rand des Kupplungstellers des Küchengeräts Kupplungsstellen und das Bearbeitungsgefäß entsprechende Gegenkupplungsstellen für Bajonettkupplungen aufweisen. Derartige Kupplungen sind einfach zu handhaben. Wenn vier Kupplungsstellen und Gegenkupplungsstellen vorgesehen sind, arbeitet die Kupplung ausgeglichen und auftretende Kräfte gut verteilend. Dies wird weiter optimiert, wenn die Kupplungsstellen und Gegenkupplungsstellungen rotationssymmetrisch um die Kupplungsachse angeordnet sind.

### Kurzbeschreibung der Zeichnung

Die Erfindung wird im Folgenden anhand schematischer Zeichnungen an einem Ausführungsbeispiel mit weiteren Einzelheiten näher erläutert. Die Erfindung ist jedoch nicht auf das Ausführungsbeispiel beschränkt.

Es zeigen schematisch:
- Fig. 1: eine perspektivische Darstellung eines erfindungsgemäßen Küchengerätes;
- Fig. 2: eine Explosionsdarstellung der Sicherungseinrichtung für eine Rührschüssel des Küchengeräts nach Fig. 1;
- Fig. 3: einen Längsschnitt des Küchengeräts nach Fig. 1, bei dem sich die Sicherungseinrichtung in einer Stellung befindet, in der eine Bearbeitung mithilfe des Küchengeräts möglich ist;
- Fig.4: einen vergrößerten Teilbereich des Längsschnitts nach Fig. 3.

### Detaillierte Beschreibung einer Ausführung der Erfindung

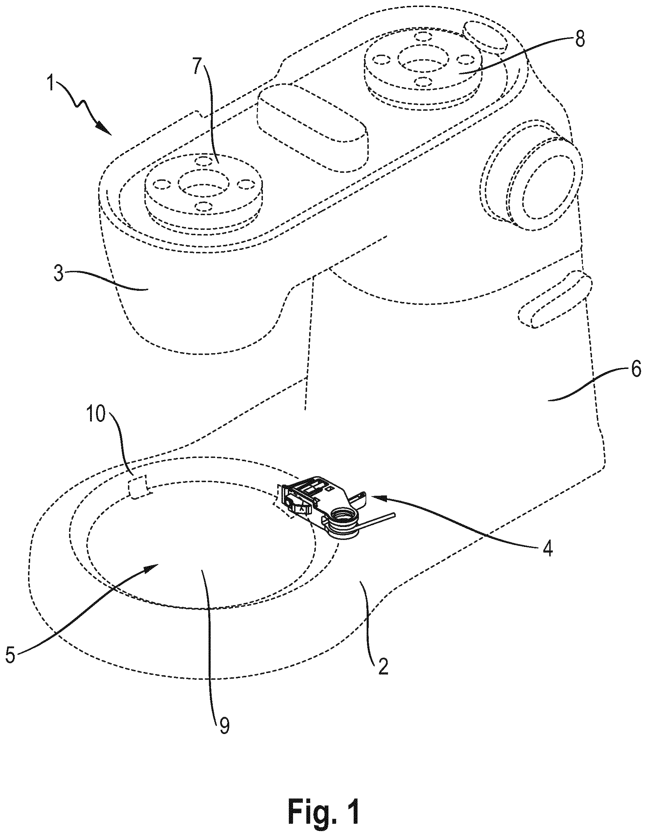

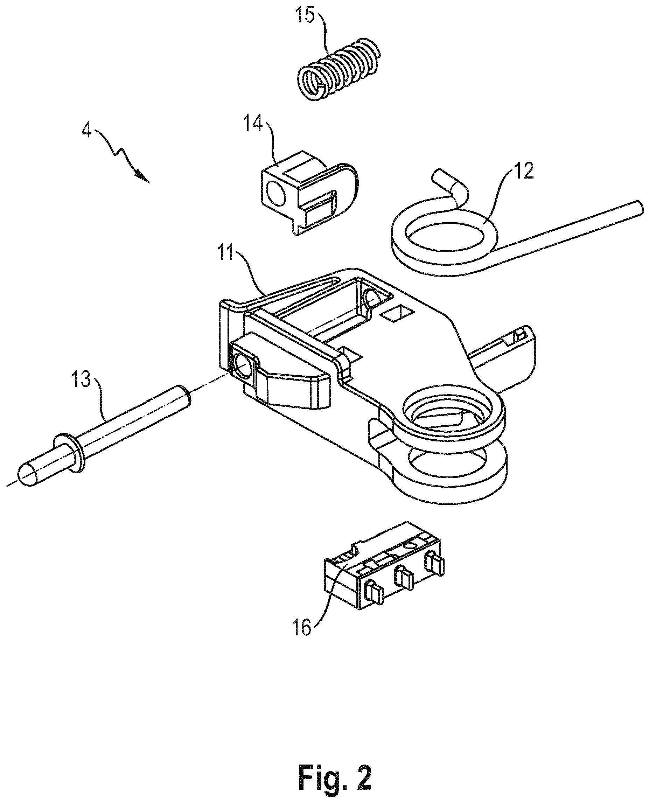

Die Fig. 1 bis 4 zeigen ein erfindungsgemäßes Küchengerät 1 oder Elemente, die für ein erfindungsgemäßes Küchengerät 1 von besonderer Bedeutung sein können.

Das Küchengerät 1 umfasst einen Sockelteil 2 und einen Schwenkarm 3. Der Schwenkarm 3 ist über eine Schwenkachse schwenkbar am Sockelteil 2 angelenkt. An der Schwenkachse ist eine Hubeinrichtung angeordnet, die dafür eingerichtet ist, eine Schwenkbewegung des Schwenkarms 3 zu unterstützen. Die Hubeinrichtung ist durch eine Hubfeder ausgebildet.

Das in Fig. 1 dargestellte Küchengerät 1 besitzt eine Kupplung 5 für eine in der Fig.1 nicht gezeigte Rührschüssel. Ein Gehäuse 6 des Küchengeräts 1 ist durch gepunktete Linien lediglich angedeutet und kann auch andere Konturen aufweisen. Das Gehäuse schließt einen Elektromotor (nicht dargestellt) ein, der mit einem EIN/AUS-Schalter am Gehäuse ein- und ausgeschaltet werden kann. Der Elektromotor kann ein austauschbares Bearbeitungsgerät in Rotation versetzen, beispielsweise einen Rührbesen. Zum Betrieb des Küchengeräts 1 sind weitere Kupplungsstellen 7 und 8 für entsprechendes Zubehör wie Mixbecher usw. vorgesehen.

Der Sockel 2 des Küchengeräts 1 ist mit einem Kupplungsteller 9 ausgestattet, an den ein Bearbeitungsgefäß, z. B. die nicht dargestellte Rührschlüssel, fest aber wieder lösbar angekuppelt werden kann. Die Rührschüssel kann dann mit Bearbeitungsgut, z. B. einer Teigmischung, befüllt werden, das dann von dem Bearbeitungswerkzeug bearbeitet werden kann.

Der Kupplungsteller 9 ist in Fig. 1 nicht näher dargestellt, weil beispielsweise durch die Deutsche Patentanmeldung DE 102010039718 A1 bekannt und nicht Teil der Erfindung. Der Kupplungsteller 9 weist eine Bajonettkupplungsvorrichtung mit vier Kupplungsstellen 10 auf, von denen eine in der Figur sichtbar ist. Es versteht sich, dass auch eine andere Anzahl von Kupplungsstellen vorgesehen sein kann, zum Beispiel 2 oder 3 oder 5. Sofern vier Kupplungsstellen 10 rotationssymmetrisch ausgebildet sind und vier entsprechende Kupplungszapfen im Bodenbereich der Rührschüssel vorgesehen sind, ergeben sich vier gleiche Möglichkeiten, die Rührschüssel in die Kupplung einzusetzen. Die Kupplungsstellen 10 weisen eine breite vertikale Nut auf, in die ein korrespondierender Kupplungszapfen eines Bodenteils der Rührschüssel von oben, also in Kupplungsrichtung entlang der Kupplungsachse, eingeführt werden kann, wenn die Rührschüssel auf den Kupplungsteller 9 gesetzt wird. Anschließend können die Kupplungszapfen durch Rotation der Rührschüssel entgegen dem Uhrzeigersinn um die Kupplungsachse unter eine Arretierkante der jeweiligen Kupplungsstelle geführt werden.

Das Küchengerät 1 weist eine Sicherungseinrichtung 4 auf, die dafür eingerichtet ist, das Ankuppeln der Rührschüssel zu überwachen und einem falsch orientierten Ankuppeln der Rührschüssel an das Küchengerät vorzubeugen.

Als Bestandteile dieser Sicherungseinrichtung 4 sind im Wesentlichen eine Halterung 11, einen damit vorzugsweise fest verbundenen Mikroschalter 16, eine Spannfeder 12, ein Stift 13, ein Gleitelement 14, eine Schraubenfeder 15 und der Mikroschalter 16 vorgesehen. Bei richtig orientierter und korrekt eingebauter Rührschüssel gibt der Mikroschalter 16 bei Betätigung ein Signal an die Steuerung des Küchengeräts 1 weiter.

Die Halterung 11 für den Mikroschalter 16 kann um eine Achse, die parallel zur Kupplungsachse verläuft, geschwenkt werden. Eine geeignete Vorspannung ist durch die Spannfeder 12 ausgebildet, d.h. die Halterung 11 wird gegen die Federkraft der Spannfeder 12 bewegt. Wenn ein entsprechend dafür ausgebildeter Zapfen an der Rührschüssel den Stift 13 trifft, wird der Stift 13 und mit ihm das Gleitelement 14 gegen die Kraft der Schraubenfeder 15 radial nach außen verschoben und betätigt den Mikroschalter 16. Bei Entnahme der Rührschüssel drückt die Schraubenfeder 15 den Stift 13 in die Ausgangsstellung zurück. Der Mikroschalter 16 schaltet. Die Spannfeder 12 bewegt die Halterung 11 in die Ausgangsstellung zurück. Der Zustand des Mikroschalters signalisiert dem Küchengerät, dass die Rührschüssel nicht ordnungsgemäß an die Kupplung 5 angekoppelt ist. In diesem Fall wird insbesondere der Betrieb eines Werkzeugs zur Bearbeitung des Guts in der Rührschüssel verhindert.

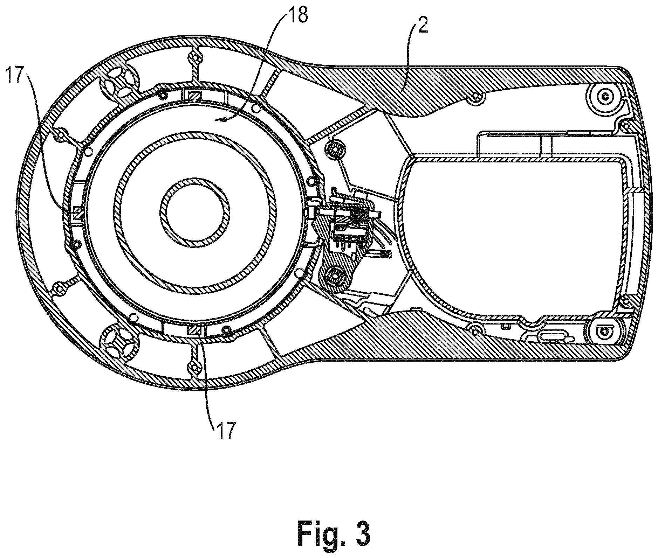

Fig. 3 erlaubt einen Blick senkrecht auf ein Bodenteil des Sockels 2. Aus der Fig. 3 gut zu erkennen sind die Kupplungszapfen 17 der Rührschüssel 18, die als Gegenkupplungsstellen mit den Kupplungsstellen der Küchenmaschine 1 zusammenwirkend einen Bajonettverschluss bilden. Sowohl die Kupplungsstellen der Küchenmaschine als auch die korrespondierenden Gegenkupplungsstellen der Rührschüssel 18 sind rotationssymmetrisch am Rand des Kupplungstellers bzw. des Bodenteils angeordnet und um jeweils 90° voneinander beabstandet.

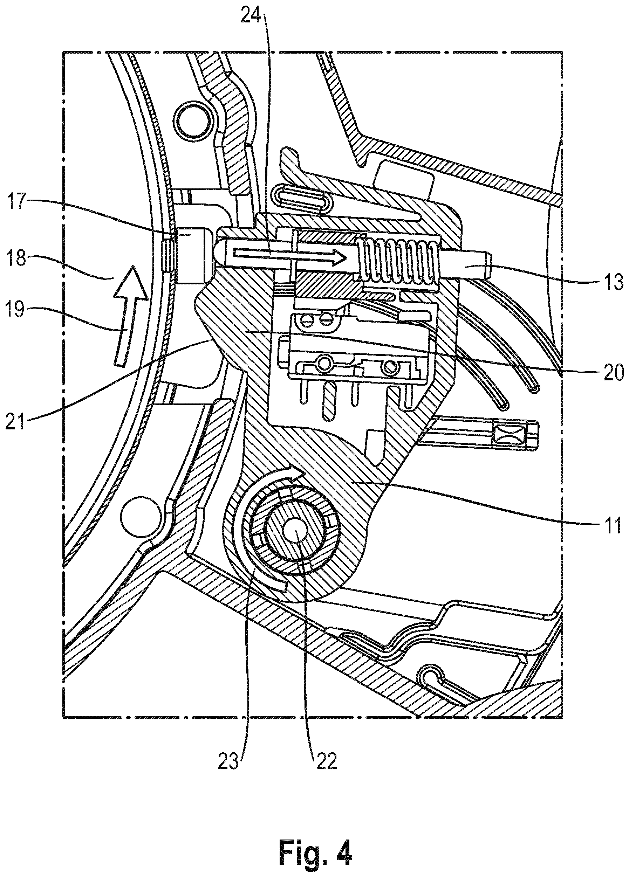

Die Funktionsweise der Sicherungseinrichtung zur Überwachung der korrekt eingesetzten Rührschüssel 18 ist Fig. 4 zu entnehmen. Nach dem Aufsetzen der Rührschüssel 18 auf den Kupplungsteller wird die Rührschüssel 18 gedreht (Pfeilrichtung 19). Dabei wird der Kupplungszapfen 17 an der erfindungsgemäßen Halterung 11 vorbeibewegt. Die Halterung 11 besitzt einen kegelförmigen Absatz 20, an dem der Kupplungszapfen 17 vorbeigeführt wird und anliegt. Damit der Kupplungszapfen 17 an dem Absatz 20 vorbei kommt, bilden die Kegelflächen in Richtung Zentrum des Kupplungstellers Anlaufschrägen 21. Die Halterung 11 selbst ist schwenkbar um eine Schwenkachse 22 ausgebildet (Schwenkrichtung 23).

Die Fig. 4 zeigt eine korrekt eingesetzte Rührschüssel. Der federgespannte Stift ist in Pfeilrichtung verschoben und löst den Mikroschalter aus. Wenn der Kupplungszapfen 17 der Rührschüssel 18 durch Drehen der Rührschüssel 18 um die Kupplungsachse 22 entgegen dem Uhrzeigersinn verschoben wird, bis er an dem Stift 13 anliegt, ergibt sich die Betriebsstellung EIN der Anordnung. Bei Drehung der Rührschüssel 18 im Uhrzeigersinn bewegt sich der Stift in Richtung Zentrum des Kupplungstellers. Der Mikroschalter schaltet AUS.

Sowohl beim Eindrehen als auch beim Herausdrehen der Rührschüssel 18 muss die Drehung gegen die Federkraft der Spannfeder durchgeführt werden. In jedem Fall muss der Kupplungszapfen 17 auf Grund der Spannung der Feder eine gewisse Kraft überwinden

Durch die schwenkbare, vorgespannte Halterung dieser Ausführung der Erfindung arbeitet die Sicherungseinrichtung auch in einem weiten Bereich von Abweichungen der Form des Bearbeitungsgefäßes von einer Idealform noch zuverlässig. Mithin können insbesondere Beeinträchtigungen der Funktion der Sicherungseinrichtung aufgrund der Fertigung der Rührschüssel und Formabweichungen durch die Beladung der Rührschüssel vermieden werden.

Die in der vorstehenden Beschreibung, den Ansprüchen und den Zeichnungen offenbarten Merkmale können sowohl einzeln als auch in beliebiger Kombination für die Verwirklichung der Erfindung in ihren verschiedenen Ausgestaltungen von Bedeutung sein.

### Bezugszeichenliste

- 1: Küchengerät
- 2: Sockel
- 3: Schwenkarm
- 4: Sicherungseinrichtung
- 5: Kupplung
- 6: Gehäuse
- 7: Kupplungsstelle für Zubehör
- 8: Kupplungsstelle für Zubehör
- 9: Kupplungsstelle
- 10: Sicherungseinrichtung
- 11: Kupplungsstelle
- 12: Spannfeder
- 13: Stift
- 14: Gleitelement
- 15: Schraubenfeder
- 16: Mikroschalter
- 17: Kupplungszapfen
- 18: Rührschüssel
- 19: Drehrichtung
- 20: Absatz
- 21: Anlaufschräge
- 22: Drehachse
- 23: Drehrichtung
- 24: Translationsrichtung

## Patentansprüche

1. Küchengerät (1) mit einer Kupplung (5) für ein Bearbeitungsgefäß (18) und mit einer Sicherungseinrichtung (4), um zu prüfen, ob das Bearbeitungsgefäß in der vorgesehenen Weise an die Kupplung (5) angekoppelt ist, wobei die Sicherungseinrichtung (4) eine Halterung (11) aufweist, mit der die Sicherungseinrichtung (4) bewegbar an dem Küchengerät (1) gelagert ist, **dadurch gekennzeichnet, dass** eine Schwenkachse (22) der Halterung (11) parallel zu einer Kupplungsachse der Kupplung (5) ausgerichtet ist.

2. Küchengerät nach Anspruch 1, **dadurch gekennzeichnet, dass** die Halterung (11) an dem Küchengerät (1) elastisch vorgespannt ist.

3. Küchengerät nach einem der vorhergehenden Ansprüche, **dadurch gekennzeichnet, dass** die Sicherungseinrichtung (4) ein relativ zur Halterung (11) der Sicherungseinrichtung (4) bewegbares Kontaktelement (13) umfasst.

4. Küchengerät nach einem der vorhergehenden Ansprüche, **dadurch gekennzeichnet, dass** die Sicherungseinrichtung (4) einen Schalter (16) umfasst.

5. Küchengerät nach Anspruch 4, **dadurch gekennzeichnet, dass** das Kontaktelement (13) durch ein elastisches Element (15) vorgespannt ist.

6. Küchengerät nach einem der vorhergehenden Ansprüche, **dadurch gekennzeichnet, dass** die Kupplung rotationssymmetrisch um die Kupplungsachse angeordnete Kupplungsstellen aufweist.

7. System, umfassend ein Küchengerät gemäß einem de Ansprüche 1 bis 6.

8. System nach Anspruch 7, **dadurch gekennzeichnet, dass** die Kupplung am Rand des Kupplungstellers des Küchengeräts Kupplungsstellen und das Bearbeitungsgefäß entsprechende Gegenkupplungsstellen für Bajonettkupplungen aufweisen.

9. System nach Anspruch 7 oder 8, **dadurch gekennzeichnet, dass** vier Kupplungsstellen und Gegenkupplungsstellen vorgesehen sind.

10. System nach Anspruch 9, **dadurch gekennzeichnet, dass** die Kupplungsstellen und Gegenkupplungsstellungen rotationssymmetrisch um die Kupplungsachse angeordnet sind.

## Claims

1. Kitchen appliance (1) having a coupling (5) for a processing vessel (18) and having a safety facility (4) in order to check whether the processing vessel is coupled to the coupling (5) in the intended manner, wherein the safety facility (4) has a holder (11) with which the safety facility (4) is mounted in a movable manner on the kitchen appliance (1), **characterised in that** a pivot axis (22) of the holder (11) is oriented parallel to a coupling axis of the coupling (5).

2. Kitchen appliance according to claim 1, **characterised in that** the holder (11) is prestressed in an elastic manner against the kitchen appliance (1).

3. Kitchen appliance according to one of the preceding claims, **characterised in that** the safety facility (4) comprises a contact element (13) that is movable relative to the holder (11) of the safety facility (4).

4. Kitchen appliance according to one of the preceding claims, **characterised in that** the safety facility (4) comprises a switch (16).

5. Kitchen appliance according to claim 4, **characterised in that** the contact element (13) is prestressed by an elastic element (15).

6. Kitchen appliance according to one of the preceding claims, **characterised in that** the coupling comprises coupling sites that are arranged in a rotationally symmetrical manner about the coupling axis.

7. System comprising a kitchen appliance according to one of claims 1 to 6.

8. System according to claim 7, **characterised in that** the coupling comprises coupling sites on the edge of the coupling plate of the kitchen appliance and the processing vessel comprises corresponding mating coupling sites for bayonet couplings.

9. System according to claim 7 or 8, **characterised in that** four coupling sites and mating coupling sites are provided.

10. System according to claim 9, **characterised in that** the coupling sites and the mating coupling sites are arranged in a rotationally symmetrical manner about the coupling axis.

## Revendications

1. Appareil de cuisine (1) comprenant un accouplement (5) pour un récipient de traitement (18) et un dispositif de sécurité (4) pour vérifier si le récipient de traitement est raccordé à l'accouplement (5) de la manière prévue, dans lequel le dispositif de sécurité (4) comprend un support (11), avec lequel le dispositif de sécurité (4) est monté de façon à être mobile sur l'appareil de cuisine (1),
**caractérisé en ce qu'**un axe de pivotement (22) du support (11) est orienté parallèlement à un axe d'accouplement de l'accouplement (5).

2. Appareil de cuisine selon la revendication 1, **caractérisé en ce que** le support (11) est précontraint élastiquement sur l'appareil de cuisine (1).

3. Appareil de cuisine selon l'une des revendications précédentes, **caractérisé en ce que** le dispositif de sécurité (4) comprend un élément de contact (13) mobile par rapport au support (11) du dispositif de sécurité (4).

4. Appareil de cuisine selon l'une des revendications précédentes, **caractérisé en ce que** le dispositif de sécurité (4) comprend un interrupteur (16).

5. Appareil de cuisine selon la revendication 4, **caractérisé en ce que** l'élément de contact (13) est précontraint par un élément élastique (15).

6. Appareil de cuisine selon l'une des revendications précédentes, **caractérisé en ce que** l'accouplement comprend des emplacements d'accouplement disposés de façon symétrique en rotation autour de l'axe d'accouplement.

7. Système, comprenant un appareil de cuisine selon l'une des revendications 1 à 6.

8. Système selon la revendication 7, **caractérisé en ce que** l'accouplement comprend des emplacements d'accouplement au bord du plateau d'accouplement de l'appareil de cuisine et le récipient de traitement comprend des emplacements de contre-accouplement correspondants pour des couplages à baïonnette.

9. Système selon la revendication 7 ou 8, **caractérisé en ce que** quatre emplacements d'accouplement et quatre emplacements de contre-accouplement sont prévus.

10. Système selon la revendication 9, **caractérisé en ce que** les emplacements d'accouplement et les emplacements de contre-accouplement sont disposés de façon symétrique en rotation autour de l'axe d'accouplement.
